# EUROPEAN PATENT SPECIFICATION

(11) **EP 3 853 541 B1**
(45) Date of publication and mention of the grant of the patent: **12.04.2023**
(21) Application number: 19752134.7
(22) Date of filing: 31.07.2019
(51) Int. Cl.: F25D 23/12, A23G 9/12, A23G 9/22

(54) **A COOLING DEVICE COMPRISING AN ICE CREAM MAKER**
KÜHLVORRICHTUNG MIT EINEM EISCREMEBEREITER
DISPOSITIF DE REFROIDISSEMENT COMPRENANT UN DISPOSITIF DE FABRICATION DE CRÈME GLACÉE

(30) Priority: 21.09.2018 TR 201813646
(43) Date of publication of application: 28.07.2021
(73) Proprietor: Arçelik Anonim Sirketi, 34445 Istanbul (TR)
(72) Inventor: KAYA, Metin, 34950 ISTANBUL (TR); KONUKSEVEN, Erhan Ilhan, 34950 ISTANBUL (TR); YENIGUN, Cagri, 34950 ISTANBUL (TR)
(86) International application number: PCT/EP2019/070617
(87) International publication number: WO 2020/057832

(56) References cited:
- EP-A1- 2 267 387
- EP-A1- 3 008 410
- EP-B1- 3 008 410
- JP-A- H02 110 274
- US-A- 4 741 174
- US-A1- 2016 366 906

## Description

The present invention relates to a cooling device comprising an ice cream maker.

In cooling devices with a freezing compartment for storing foodstuffs by freezing, an ice cream maker can be placed into the freezing compartment. In the state of the art, the ice cream maker placed into the freezing compartment comprises a receptacle wherein the ingredients of the ice cream are placed, a mixer which mixes said ingredients, a motor, and a transmission mechanism which transmits the movement of the motor to the mixer. The movement is transmitted by means of a shaft which connects the transmission mechanism and the mixer to each other. The positioning of the ice cream maker, especially the motor and the transmission mechanism with respect to each other in the freezing compartment is important for the effective operation of the ice cream maker and for the efficient use of the freezing compartment volume. The incorrect positioning of the receptacle, the motor and the transmission mechanism in the freezing compartment causes the air flowing around the receptacle to increase while preventing the ice cream mixer in the receptacle from freezing in the desired period of time and from being mixed at the desired temperature. Especially the positioning of the channels with respect to each other which blow air into the receptacle and the freezing compartment is important. Solutions for enabling the cold air blown into the freezing compartment to directly reach the receptacle and for not losing the cooling capacity should be developed.

In the state of the European Patent No. EP3008410, a cooling device is disclosed, comprising an ice cream making device which is placed into the freezing compartment and which has a cabinet, a receptacle disposed inside the cabinet and wherein ice cream is prepared, a mixer situated in the receptacle, a motor which drives and rotates the mixer, and a transmission means. In this document, the motor is positioned in front of the cold air blowing channels in the freezing compartment, and the transmission means is positioned under the receptacle. Said positioning of the motor and the transmission means causes the air flowing around the receptacle to increase while preventing the ice cream mixer in the receptacle from freezing in the desired period of time and from being mixed at the desired temperature.

Another state of the art document is European Patent Application No. EP0105586. In this document, a cooling device is disclosed, comprising an ice cream making machine having a casing which supports the motor and the transmission means and a sealing element extending between said casing and the wall.

In the state of the art Turkish Patent Application No. TR201308318, a cooling device is disclosed, comprising an ice cream making machine having a cabinet and a cover which enables the air in the cabinet to at least partially go outside.

The aim of the present invention is the realization of a cooling device comprising an ice cream maker to which the cold air blown into the freezing compartment is efficient transferred.

The cooling device realized in order to attain the aim of the present invention, explicated in the first claim and the respective claims thereof comprises an ice cream maker having a guide which is positioned in the freezing compartment all around the receptacle such that a gap remains between the receptacle and the guide and at least one inlet which aligns with the air blowing hole on the guide and which enables the air entering through the air blowing hole to circulate between the guide and the receptacle.

When the ice cream maker placed into the freezing compartment is operated, the motor starts to operate and the movement of the motor enables the mixer, which extends into the receptacle and provides the mixing of the materials in the receptacle, to be driven and rotated by means of the transmission mechanism. The guide enables the air coming through the air blowing hole and the inlet to be directed so as to cool all around the receptacle and keeping the same cold. Moreover, in case the materials filled into the receptacle overflow, the gap remaining between the receptacle and the guide enables the overflowing materials to remain in the guide and prevent the same from dispersing in the freezing compartment. The air blowing hole and the inlet are connected to each other in an airtight manner.

The ice cream maker comprises at least one outlet which is arranged on the guide and which provides the exit of the air circulating between the guide and the receptacle. In an embodiment of the present invention, at least two slit-formed outlets, which are arranged at certain intervals at the same level, are provided on the guide.

According to the present invention, the guide has the same form as the receptacle and is positioned coaxially with the receptacle so as to surround the receptacle.

In an embodiment of the present invention, the guide is plastic.

In the preferred embodiment of the present invention, the ice cream maker comprises a guiding member which extends between the inlet and the receptacle wall and which enables the air entering through the opening to pass through the inlet and to disperse between the guide and the receptacle along the receptacle wall. The lower and upper walls of the guiding member are inclined from inlet towards the receptacle.

In an embodiment of the present invention, the ice cream maker comprises a handle which is provided on the guide and which enables the guide to be easily carried and moved by the user. Thus, the user can easily take the guide and the receptacle out of the freezing compartment. In the embodiment of the present invention, the ice cream maker comprises an auxiliary handle which is provided on the receptacle as aligned with the handle on the guide, which is fitted into the handle and which enables the receptacle to be easily carried and moved by the user. The auxiliary handle is fitted into the handle, thus the auxiliary handle creates no barrier between the receptacle and the guide which may block the air flow.

A cooling device realized in order to attain the aim the object of the present invention is illustrated in the attached figures, where:
Figure 1 - is the perspective view of a cooling device.
Figure 2 - is the front view of the ice cream maker.
Figure 3 - is the rear view of the guide and the receptacle.
Figure 4 - is the sideways view of the guide and the receptacle.
Figure 5 - is the top view of the guide and the receptacle.
Figure 6 - is the top perspective view of the guide and the receptacle.

The elements illustrated in the figures are numbered as follows:
1. Cooling device
2. Freezing compartment
3. Ice cream maker
4. Receptacle
5. Mixer
6. Motor
7. Transmission mechanism
8. Guide
9. Inlet
10. Outlet
11. Handle
12. Auxiliary handle
13. Guiding member

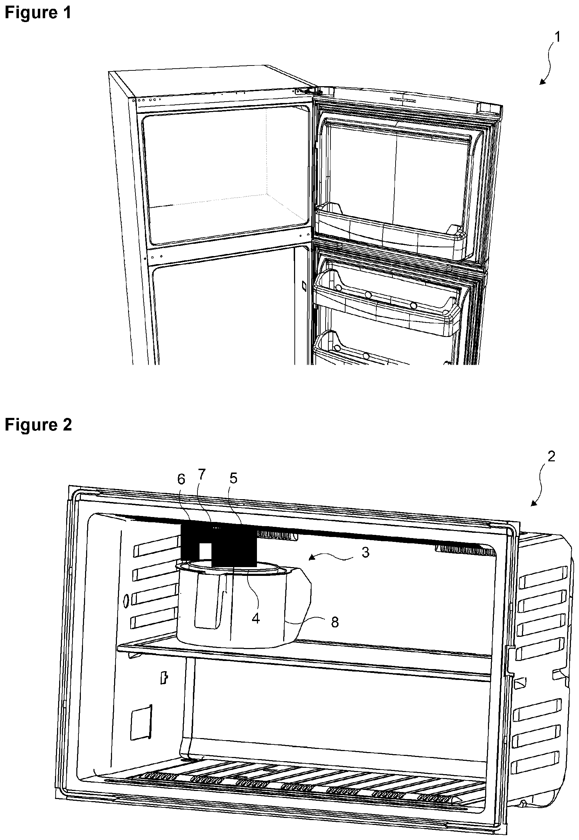

The cooling device (1) has at least one freezing compartment (2) wherein the articles/foodstuffs to be frozen are placed and at least one opening (not shown in figures) which is arranged on at least one wall of the freezing compartment (2) and which enables the cold air to reach the freezing compartment (2), and further comprises at least one ice cream maker (3) having a receptacle wherein the ingredients for ice cream are placed and the ice cream is prepared, at least one mixer (5) which extends into the receptacle and which provides the mixing of the materials in the receptacle (4), a motor (6), a transmission mechanism (7) which transmits the movement of the motor (6) to the mixer, a guide (8) which is positioned in the freezing compartment (2) all around the receptacle (4) such that a gap remains between the receptacle (4) and the guide (8), and at least one inlet (9) which is arranged on the guide (8) so as to align with the opening and which enables the air entering through the opening to be circulated in between the guide (8) and the receptacle (4) (Figure 1 and Figure 2).

When the ice cream maker (3) placed into the freezing compartment (2) is operated, the motor (6) starts to operate and the movement of the motor (6) enables the mixer (5), which extends into the receptacle (4) and provides the mixing of the materials in the receptacle (4), to be driven and rotated by means of the transmission mechanism (7). The guide (8) enables the air coming through the opening and the inlet (9) to be directed so as to cool all around the receptacle (4) and keeping the same cold. Moreover, in case the materials filled into the receptacle (4) overflow, the gap remaining between the receptacle (4) and the guide (8) enables the overflowing materials to remain in the guide (8) and prevent the same from dispersing in the freezing compartment (2).

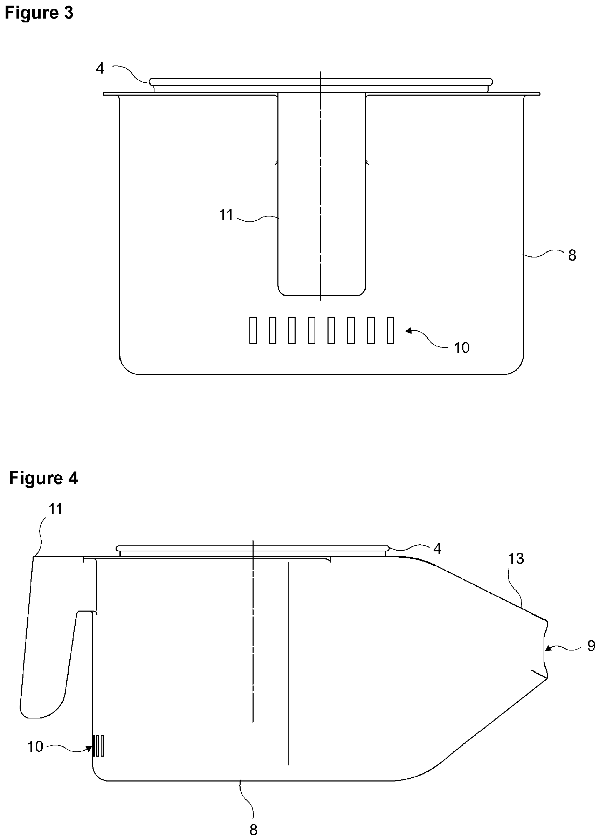

The ice cream maker (3) comprises at least one outlet (10) which is arranged on the guide (8) and which provides the exit of the air circulating between the guide (8) and the receptacle (4). In an embodiment of the present invention, at least two quadrilateral outlets (10), which are arranged at certain intervals at the same level, are provided on the guide (8). In the preferred embodiment of the present invention, the outlet (10) is slit-shaped (Figure 3 and Figure 4).

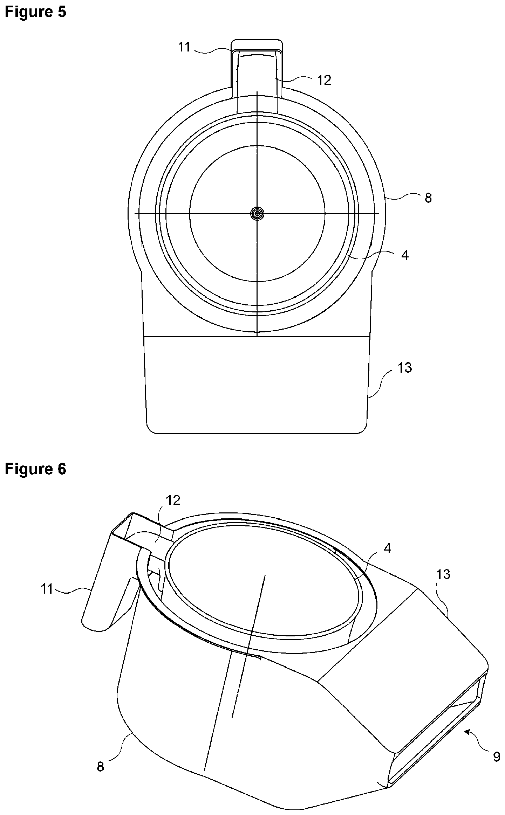

According to the present invention, the guide (8) has the same form as the receptacle (4) and is positioned coaxially with the receptacle (4) so as to surround the receptacle (4) (Figure 5).

In an embodiment of the present invention, the guide (8) is produced from plastic material.

In the preferred embodiment of the present invention, the ice cream maker (3) comprises a guiding member (13) which extends between the inlet (9) and the receptacle (4) wall and which enables the air entering through the opening to pass through the inlet (9) and to disperse between the guide (8) and the receptacle (4) along the receptacle (4) wall. The lower and upper walls of the guiding member (13) are inclined from inlet (9) towards the receptacle (4).

In an embodiment of the present invention, the cooling device (1) comprises a sealing element (not shown in figures) which is arranged between the opening and the inlet (9) and which enables the entire air blown through the opening to be directed towards the inlet (9).

In an embodiment of the present invention, the ice cream maker (3) comprises a handle (11) which is provided on the guide (8) and which enables the guide (8) to be easily carried and moved by the user. Thus, the user can easily take the guide (8) and the receptacle (4) out of the freezing compartment (2). In the embodiment of the present invention, the ice cream maker (3) comprises an auxiliary handle (12) which is provided on the receptacle (4) as aligned with the handle (11) on the guide (8), which is fitted into the handle (11) and which enables the receptacle (4) to be easily carried and moved by the user. The auxiliary handle (12) is fitted into the handle (11), thus the auxiliary handle (12) creates no barrier between the receptacle (4) and the guide (8) which may block the air flow (Figure 6).

## Claims

1. A cooling device (1) which has at least one freezing compartment (2) wherein the articles/foodstuffs to be frozen are placed and at least one opening which is arranged on at least one wall of the freezing compartment (2) and which enables the cold air to reach the freezing compartment (2), and further **comprising** at least one ice cream maker (3) having a receptacle (4) wherein the ingredients for ice cream are placed and the ice cream is prepared, at least one mixer (5) which extends into the receptacle (4) and which provides the mixing of the materials in the receptacle (4), a motor (6), a transmission mechanism (7) which transmits the movement of the motor (6) to the mixer (5), a guide (8) which is positioned in the freezing compartment (2) all around the receptacle (4) such that a gap remains between the receptacle (4) and the guide (8), and at least one inlet (9) which is arranged on the guide (8) so as to align with the opening and which enables the air entering through the opening to be circulated in between the guide (8) and the receptacle (4),
**characterized in that**
the guide (8) has the same form with the receptacle (4) and that the guide (8) is positioned coaxially with the receptacle (4)

2. A cooling device (1) as in Claim 1, **characterized in that** the ice cream maker (3) comprises at least one outlet (10) which is arranged on the guide (8) and which provides the exit of the air circulating between the guide (8) and the receptacle (4).

3. A cooling device (1) as in Claim 2, **characterized by** at least two quadrilateral outlets (10) which are arranged at certain intervals at the same level on the guide (8)

4. A cooling device (1) as in Claim 2 or 3, **characterized in that** the outlet (10) is slit-shaped.

5. A cooling device (1) as in any one of the preceding claims, **characterized in that** the ice cream maker (3) comprises a guiding member (13) which extends between the inlet (9) and the receptacle (4) wall and which comprises lower and upper walls inclined from the inlet (9) towards the receptacle (4) such that the air entering through the opening passes through the inlet (9) and disperses between the guide (8) and the receptacle (4) along the receptacle (4) wall.

6. A cooling device (1) as in any one of the preceding claims, **characterized in that** the ice cream maker (3) comprises a handle (11) which is provided on the guide (8) and which enables the guide (8) to be easily carried and moved by the user.

7. A cooling device (1) as in Claim 6, **characterized in that** the ice cream maker (3) comprises an auxiliary handle (12) which is provided on the receptacle (4) as aligned with the handle (11) on the guide (8), which is fitted into the handle (11) and which enables the receptacle (4) to be easily carried and moved by the user.

## Patentansprüche

1. Ein Kühlgerät (1), das mindestens ein Gefrierfach (2) aufweist, in dem die einzufrierenden Artikel/Lebensmittel platziert sind, und mindestens eine Öffnung, die an mindestens einer Wand des Gefrierfachs (2) angeordnet ist und die es ermöglicht, das kalte Luft in das Gefrierfach (2) zu gelangen, und darüber hinaus umfasst es mindestens eine Speiseeismaschine (3) mit einem Behälter (4), in den die Zutaten für Eiscreme gegeben werden und die Eiscreme zubereitet wird, mindestens einen Mischer (5), der sich in den Behälter (4) erstreckt und der für das Mischen der Materialien in dem Behälter (4) sorgt, einen Motor (6), einen Übertragungsmechanismus (7), der die Bewegung des Motors (6) auf den Mischer (5) überträgt, eine Führung (8), die in dem Gefrierfach (2) rund um das Behälter (4) positioniert ist, so dass ein Spalt zwischen dem Behälter (4) und der Führung (8) verbleibt, mindestens einen Einlass (9), der an der Führung (8) so angeordnet ist, dass er mit der Öffnung fluchtet, und der ermöglicht, dass die durch die Öffnung eintretende Luft zwischen der Führung (8) und dem Behälter (4) zirkuliert, gekennzeichnet ist es durch die Führung (8) die gleiche Form wie die Behälter (4) hat und dass die Führung (8) koaxial zur Behälter (4) positioniert ist.

2. Ein Kühlgerät (1), wie in Anspruch 1 aufgeführt, **ist dadurch gekennzeichnet, dass** die Speiseeismaschine (3) mindestens einen Auslass (10) umfasst, der an der Führung (8) angeordnet ist und den Austritt der zwischen der Führung (8) und dem Behälter (4) zirkulierenden Luft bereitstellt.

3. Ein Kühlgerät (1), wie in Anspruch 2 aufgeführt, **ist dadurch gekennzeichnet, dass** mindestens zwei viereckige Auslässe (10), die in gewissen Abständen auf gleicher Höhe an der Führung (8) angeordnet sind

4. Ein Kühlgerät (1), wie in Anspruch 2 oder 3 aufgeführt, **ist dadurch gekennzeichnet, dass** der Auslass (10) schlitzförmig ist.

5. Ein Kühlgerät (1), wie in einem der vorherigen Ansprüchen aufgeführt, **ist dadurch gekennzeichnet, dass** die Speiseeismaschine (3) ein Führungselement (13) umfasst, das sich zwischen dem Einlass (9) und der Wand des Behälters (4) erstreckt und das untere und obere Wände umfasst, die vom Einlass (9) zum Behälter (4) hin geneigt sind, so dass die durch die Öffnung eintretende Luft durch den Einlass (9) strömt und sich zwischen der Führung (8) und dem Behälter (4) entlang der Wand des Behälters (4) verteilt.

6. Ein Kühlgerät (1), wie in einem der vorherigen Ansprüchen aufgeführt, **ist dadurch gekennzeichnet, dass** die Speiseeismaschine (3) einen Griff (11) umfasst, der an der Führung (8) vorgesehen ist und der es ermöglicht, die Führung (8) leicht zu tragen und durch den Benutzer zu bewegen.

7. Ein Kühlgerät (1), wie in Anspruch 6 aufgeführt, **ist dadurch gekennzeichnet, dass** die Speiseeismaschine (3) einen Zusatzhandgriff (12) umfasst, der an der Behälter (4) fluchtend mit dem Handgriff (11) an der Führung (8) vorgesehen ist, die in den Handgriff (11) eingepasst ist und ermöglicht der Behälter (4) vom Benutzer leicht getragen und bewegt werden kann.

## Revendications

1. Un dispositif de refroidissement (1) qui a au moins un compartiment de congélation (2) dans lequel les articles/denrées alimentaires à congeler sont placés et au moins une ouverture qui est agencée sur au moins une paroi du compartiment de congélation (2) et qui permet à l'air froid d'atteindre le compartiment de congélation (2), et **comprenant** en outre au moins une machine à crème glacée (3) ayant un réceptacle (4) dans lequel les ingrédients pour la crème glacée sont placés et la crème glacée est préparée, au moins un mélangeur (5) qui s'étend dans le réceptacle (4), **caractérisé en ce que** la machine à crème glacée (3) a été conçue pour produire de la crème glacée et qui assure le mélange des matériaux dans le réceptacle (4), un moteur (6), un mécanisme de transmission (7) qui transmet le mouvement du moteur (6) au mélangeur (5), un guide (8) qui est positionné dans le compartiment de congélation (2) tout autour du réceptacle (4) de sorte qu'un espace reste entre le réceptacle (4) et le guide (8), et au moins une entrée (9) qui est disposée sur le guide (8) de manière à s'aligner avec l'ouverture et qui permet à l'air entrant par l'ouverture de circuler entre le guide (8) et le récipient (4), **caractérisé en ce que** le guide (8) a la même forme que le récipient (4) et que le guide (8) est positionné coaxialement au récipient (4).

2. Un dispositif de refroidissement (1) selon la déclaration 1, **caractérisé en ce que** la sorbetière (3) comprend au moins une sortie (10) qui est disposée sur le guide (8) et qui assure la sortie de l'air circulant entre le guide (8) et le réceptacle (4).

3. Un dispositif de refroidissement (1) comme dans la déclaration 2, **caractérisé par** au moins deux sorties quadrilatérales (10) qui sont disposées à certains intervalles au même niveau sur le guide (8).

4. Un dispositif de refroidissement (1) comme dans la déclaration 2 ou 3, **caractérisé en ce que** la sortie (10) est en forme de fente.

5. Un dispositif de refroidissement (1) comme dans l'une quelconque des déclarations précédentes, **caractérisé en ce que** la machine à crème glacée (3) comprend un élément de guidage (13) qui s'étend entre l'entrée (9) et la paroi du récipient (4) et qui comprend des parois inférieure et supérieure inclinées depuis l'entrée (9) vers le récipient (4) de sorte que l'air entrant par l'ouverture passe à travers l'entrée (9) et se disperse entre le guide (8) et le récipient (4) le long de la paroi du récipient (4).

6. Un dispositif de refroidissement (1) comme dans l'une quelconque des déclarations précédentes, **caractérisé en ce que** la sorbetière (3) comprend une poignée (11) qui est prévue sur le guide (8) et qui permet au guide (8) d'être facilement porté et déplacé par l'utilisateur.

7. Un dispositif de refroidissement (1) comme dans la déclaration 6, **caractérisé en ce que** la sorbetière (3) comprend une poignée auxiliaire (12) qui est prévue sur le réceptacle (4) en alignement avec la poignée (11) sur le guide (8), qui est insérée dans la poignée (11) et qui permet au réceptacle (4) d'être facilement porté et déplacé par l'utilisateur.
